(19) Europäisches Patentamt
European Patent Office
Office européen des brevets

(11) **EP 3 239 537 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(51) Int Cl.:
*F16B 7/04* *(2006.01)*     *H01Q 1/12* *(2006.01)*

(21) Anmeldenummer: **16167015.3**

(22) Anmeldetag: **26.04.2016**

(54) **BEFESTIGUNGSEINRICHTUNG UND VERFAHREN ZU DEREN HERSTELLUNG**

FIXING DEVICE AND METHOD FOR ITS MANUFACTURE

DISPOSITIF DE FIXATION ET SON PROCEDE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.11.2017 Patentblatt 2017/44**

(73) Patentinhaber:
• **Engbarth, Hans-Georg
47608 Geldern (DE)**
• **Eyckmann, Heinrich Bartholomäus
47608 Geldern (DE)**

(72) Erfinder:
• **Engbarth, Hans-Georg
47608 Geldern (DE)**
• **Eyckmann, Heinrich Bartholomäus
47608 Geldern (DE)**

(74) Vertreter: **Fischer, Uwe
Patentanwalt
Moritzstraße 22
13597 Berlin (DE)**

(56) Entgegenhaltungen:
EP-A1- 2 309 832     EP-A1- 2 365 580
EP-A1- 2 913 887     US-A1- 2014 321 902

**Beschreibung**

Die Erfindung bezieht sich auf ein Verfahren mit den Merkmalen gemäß dem Oberbegriff des Patentanspruchs 1. Ein solches Verfahren ist im Zusammenhang mit der Herstellung von Antennenhaltern beispielsweise aus der Europäischen Patentanmeldung EP 14 166 890 (Veröffentlichungsnummer: EP 2 913 887 A1) bekannt.

Andere Befestigungseinrichtungen sind aus den Schriften EP 2 365 580 A1, EP 2 309 832 A1 und US 2014/0321902 A1 bekannt.

Der Erfindung liegt die Aufgabe zugrunde, ein Verfahren zum Herstellen einer Befestigungseinrichtung anzugeben, das sich einfach und kostengünstig durchführen lässt und Befestigungseinrichtungen liefert, bei denen Klemmelement und Gegenklemmelement besonders große Haltekräfte an der Montagebasis ausüben können.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Ein wesentlicher Vorteil des erfindungsgemäßen Verfahrens ist darin zu sehen, dass aufgrund der Herstellung von Klemmelement oder Gegenklemmelement aus einem einteiligen Körper besonders lange Stufen - in Klemmelementlängsrichtung gesehen - herstellbar sind und somit die Klemmwirkung der Stufen auf der Montagebasis größer ist als bei den Befestigungseinrichtungen, die in der oben genannten Offenlegungsschrift EP 2 913 887 A1 offenbart sind.

Besonders vorteilhaft ist es, wenn das Klemmelement und/oder das Gegenklemmelement (jeweils) aus einem einteiligen quaderförmigen, insbesondere plattenförmigen, Stahlblock durch Materialabtrag mittels eines spanabhebenden Verfahrens hergestellt werden.

Auf der Innenseite des Gegenklemmelements werden durch den Materialabtrag vorzugsweise Stufen herausgearbeitet, die sich jeweils mit konstanter Stufenhöhe von einem Ende des Gegenklemmelements - entlang einer Richtung, die nach der Montage des Gegenklemmelements an der Montagebasis der Längsrichtung der Montagebasis entspricht und nachfolgend Klemmelementlängsrichtung genannt wird - bis zu dem anderen Ende des Gegenklemmelements erstrecken, und zwar durchgehend oder - im Falle von Unterbrechungen wie beispielsweise querverlaufenden Nuten - zumindest über eine Länge von mindestens 50 % des Gesamtabstandes zwischen den beiden Enden des Gegenklemmelements.

Erfindungsgemäß werden auf der Innenseite des Klemmelements durch Materialabtrag Stufen herausgearbeitet, die sich mit konstanter Stufenhöhe von einem Ende des Klemmelements entlang der Klemmelementlängsrichtung zu dem anderen Ende des Klemmelements erstrecken, wobei sich die Stufen durchgehend von dem einen Ende des Klemmelements zu dem anderen Ende erstrecken oder - im Falle von Unterbrechungen wie beispielsweise querverlaufender Nuten oder eines querverlaufenden Durchgangslochs - zumindest über eine Länge von mindestens 30 %, besonders bevorzugt zumindest 50%, des Gesamtabstandes zwischen den beiden Enden des Klemmelements.

Der Gesamtabstand zwischen den beiden Enden des Gegenklemmelements und der Gesamtabstand zwischen den beiden Enden des Klemmelements beträgt bevorzugt jeweils zwischen 10 und 15 cm, wobei sich die Stufen des Klemmelements über eine Länge von vorzugsweise mindestens 3 cm, besonders bevorzugt zwischen 3 cm und 6 cm, von dem einen Ende des Klemmelements bis zu einer Unterbrechung, insbesondere in Form eines querverlaufenden Durchgangslochs oder einer querverlaufenden Nut, und über eine Länge von vorzugsweise mindestens 3 cm, besonders bevorzugt zwischen 3 cm und 6 cm, von der Unterbrechung bis zum anderen Ende erstrecken, und wobei die Stufen des Gegenklemmelements - abzüglich von etwaigen Unterbrechungen wie querverlaufenden Nuten - jeweils eine Länge von mindestens 8 cm aufweisen.

Durch Materialabtrag im Klemmelement wird bevorzugt ein Durchgangsloch hergestellt, das sich senkrecht von der Außenseite des Klemmelements bis zur Innenseite und senkrecht zu den Stufen erstreckt. Ein solches Durchgangsloch kann in vorteilhafter Weise zur Anbringung eines Anschlussrohres, das als Antennenmast oder Absturzsicherungselement eingesetzt werden kann, herangezogen werden.

Darüber hinaus werden auf der Innenseite des Klemmelements durch Materialabtrag vorzugsweise solche Stufen herausgearbeitet, die sich von einem Ende des Klemmelements - entlang der Klemmelementlängsrichtung - bis zu dem Durchgangsloch erstrecken, von dem Durchgangsloch unterbrochen werden und sich von dem Durchgangsloch zu dem anderen Ende des Klemmelements erstrecken.

Auch ist es vorteilhaft, wenn durch Materialabtrag auf der Innenseite des Klemmelements zumindest eine Nut hergestellt wird, die sich senkrecht zur Klemmelementlängsrichtung erstreckt, und auf der Innenseite des Klemmelements durch Materialabtrag solche Stufen herausgearbeitet werden, die sich von einem Ende des Klemmelements - entlang der Klemmelementlängsrichtung - bis zu der zumindest einen Nut erstrecken, von der zumindest einen Nut unterbrochen werden und sich von der Nut zu dem anderen Ende des Klemmelements oder einer benachbarten weiteren Nut (oder einem Durchgangsloch) jeweils mit konstanter Stufenhöhe erstrecken.

Auf der Innenseite des Klemmelements werden bei einer vorteilhaften Ausgestaltung durch Materialabtrag zunächst Stufen herausgearbeitet, die sich von einem Ende des Klemmelements durchgehend bis zu dem anderen Ende des Klemmelements erstrecken. Das Durchgangsloch und/oder die Nut wird vorzugsweise hergestellt, nachdem die Stufen herausgearbeitet worden sind, so dass die Nut und/oder das Durchgangsloch die Stufen unterbrechen.

Alternativ kann die Reihenfolge auch invers sein, so dass die Stufen erst nach der Nut und/oder dem Durchgangsloch hergestellt werden.

Das Klemmelement und/oder das Gegenklemmelement werden vorzugsweise jeweils aus einem einteiligen Metallkörper durch ein spanabhebendes Verfahren hergestellt.

Die Stufen werden vorzugsweise durch Fräsen hergestellt. Das Durchgangsloch wird vorzugsweise durch Fräsen oder Bohren hergestellt.

In das Durchgangsloch wird vorzugsweise ein Rohrende eines Rohres - nachfolgend auch Anschlussrohr genannt - eingesetzt und dort befestigt, insbesondere eingeschraubt, eingeklebt und/oder eingeschweißt.

Bei einer weiteren vorteilhaften Ausgestaltung ist vorgesehen, dass in einem Randbereich des Klemmelements zumindest ein Befestigungsloch hergestellt wird, das ein Durchführen eines Schraubelements, insbesondere einer Gewindestange oder einer Schraube, ermöglicht und in einem Randbereich des Gegenklemmelements zumindest ein Gewindeloch hergestellt wird, das ein Einschrauben des Schraubelements und ein Verschrauben des Klemmelements mit dem Gegenklemmelement mittels des Schraubelements ermöglicht.

Als Befestigungseinrichtung wird vorzugsweise eine Absturzsicherungseinrichtung oder ein Antennenhalter hergestellt.

Wie bereits oben erwähnt, werden das Klemmelement und das Gegenklemmelement vorzugsweise jeweils aus einem einteiligen quaderförmigen, insbesondere plattenförmigen, Stahlblock durch Materialabtrag hergestellt. Als vorteilhaft wird es diesbezüglich angesehen, wenn bei dem Klemmelement die Stufenflächen der Stufen nach dem Materialabtrag parallel zu einer innenliegenden Innenfläche des Klemmelements, parallel zur Außenfläche, an der das Anschlussrohr angebracht ist, und parallel zu den Anschlussflächen, durch die die Befestigungslöcher hindurchgeführt sind, liegen.

Bei dem Gegenklemmelement liegen die Stufenflächen der Stufen nach dem Materialabtrag vorzugsweise parallel zur innenliegenden Innenfläche des Gegenklemmelements, parallel zur Außenfläche des Gegenklemmelements und parallel zu den Anschlussflächen, in die die Gewindelöcher eingeschnitten sind.

Klemmelement und Gegenklemmelement sind vorzugsweise derart aufeinander abgestimmt, dass sich nach der Montage und dem Verschrauben von Klemmelement und Gegenklemmelement ergibt, dass die Stufenflächen aller Stufen des Klemmelements und des Gegenklemmelements parallel zur innenliegenden Innenfläche des Klemmelements, parallel zur Außenfläche des Klemmelements, parallel zu den Anschlussflächen, durch die die Befestigungslöcher hindurchgeführt sind, parallel zur innenliegenden Innenfläche des Gegenklemmelements, parallel zur Außenfläche des Gegenklemmelements und parallel zu den Anschlussflächen, in die die Gewindelöcher eingeschnitten sind, liegen.

An den Stufenkanten sind die Stufen vorzugsweise jeweils rechtwinklig; an die oberen Stufenflächen schließt sich somit also vorzugsweise jeweils eine dazu senkrechte Stufenfläche an, die bei dem Klemmelement jeweils senkrecht zur innenliegenden Innenfläche des Klemmelements, senkrecht zur Außenfläche des Klemmelements und senkrecht zu den Anschlussflächen, durch die die Befestigungslöcher hindurchgeführt sind, liegt.

Bei dem Gegenelement liegen die senkrechten Stufenfläche vorzugsweise senkrecht zur innenliegenden Innenfläche des Gegenklemmelements, senkrecht zur Außenfläche des Gegenklemmelements und senkrecht zu den Anschlussflächen, in den die Gewindelöcher eingeschnitten sind.

Nach der Montage des Klemmelements und des Gegenklemmelements ergibt sich bei einer als besonders vorteilhaft angesehenen Variante eine Konfiguration, bei der alle senkrechten Stufenflächen des Klemmelements und des Gegenklemmelements jeweils senkrecht zur innenliegenden Innenfläche des Klemmelements, senkrecht zur Außenfläche des Klemmelements, senkrecht zu den Anschlussflächen des Klemmelements, durch die die Befestigungslöcher hindurchgeführt sind, senkrecht zur innenliegenden Innenfläche des Gegenklemmelements, senkrecht zur Außenfläche des Gegenklemmelements und senkrecht zu den Anschlussflächen des Gegenklemmelements, in den die Gewindelöcher eingeschnitten sind, liegen.

Die Erfindung bezieht sich darüber hinaus auf eine Befestigungseinrichtung, die zur Montage an zwei Dachsparren geeignet ist, mit einer Montagebasis, die teleskopierbar ausgeführt und längenmäßig verstellbar ist, einem Klemmelement und einem Gegenklemmelement, das mit dem Klemmelement derart verbindbar ist, dass das Klemmelement und das Gegenklemmelement einen Abschnitt der Montagebasis einklemmen können.

Bezüglich einer solchen Befestigungseinrichtung ist erfindungsgemäß vorgesehen, dass das Klemmelement und/oder das Gegenklemmelement jeweils aus einem einteiligen Metallkörper bestehen, wobei auf der Innenseite des Klemmelements und/oder des Gegenklemmelements Stufen vorhanden sind, deren Stufenkanten nach der Montage des Klemmelements und des Gegenklemmelements an der Montagebasis anliegen und wobei sich die Stufen von dem einen Ende des Klemmelements bzw. des Gegenklemmelements - entlang der Klemmelementlängsrichtung - zu dem jeweils anderen Ende erstrecken, und zwar durchgehend oder zumindest über eine Länge von mindestens 30% des Gesamtabstandes zwischen den beiden Endes des Klemmelements bzw. Gegenklemmelements.

Bezüglich der Vorteile der erfindungsgemäßen Befestigungseinrichtung sei auf die obigen Ausführungen im Zusammenhang mit dem erfindungsgemäßen Verfahren verwiesen.

Das Klemmelement und/oder das Gegenklemmelement können jeweils als einteiliges Gussteil hergestellt werden, jedoch wird es als besonders vorteilhaft angesehen, wenn das Klemmelement und/oder das Gegenklemmelement jeweils aus einem einteiligen quaderförmigen, insbesondere plattenförmigen, Stahlblock durch Materialabtrag mittels eines spanabhebenden Verfahrens hergestellt worden sind.

Die Erfindung wird nachfolgend anhand von Ausführungsbeispielen näher erläutert; dabei zeigen beispielhaft

Figur 1    ein Ausführungsbeispiel für eine erfindungsgemäße Befestigungseinrichtung, die eine Absturzsicherungseinrichtung bildet, in einer dreidimensionalen Sicht schräg von der Seite nach einer Montage an zwei Dachsparren,

Figur 2    ein Klemmelement und ein Gegenklemmelement der Befestigungseinrichtung gemäß Figur 1 näher im Detail,

Figur 3    ein Ausführungsbeispiel für ein Klemmelement, das bei der Befestigungseinrichtung gemäß Figur 1, 2 und 5 eingesetzt werden kann, in einer dreidimensionalen Darstellung mit Blick auf die Innenseite des Klemmelements,

Figur 4    ein Ausführungsbeispiel für ein Gegenklemmelement, das bei der Befestigungseinrichtung gemäß Figur 1, 2 und 5 werden kann, in einer dreidimensionalen Sicht schräg von der Seite auf die Innenseite des Gegenklemmelements und

Figur 5    ein weiteres Ausführungsbeispiel für eine erfindungsgemäße Befestigungseinrichtung in einer dreidimensionalen Sicht schräg von der Seite nach einer Montage an zwei Dachsparren, wobei die Befestigungseinrichtung gemäß Figur 5 einen Antennenhalter, insbesondere einen Satellitenantennenhalter, bildet.

In den Figuren werden der Übersicht halber für identische oder vergleichbare Komponenten stets dieselben Bezugszeichen verwendet.

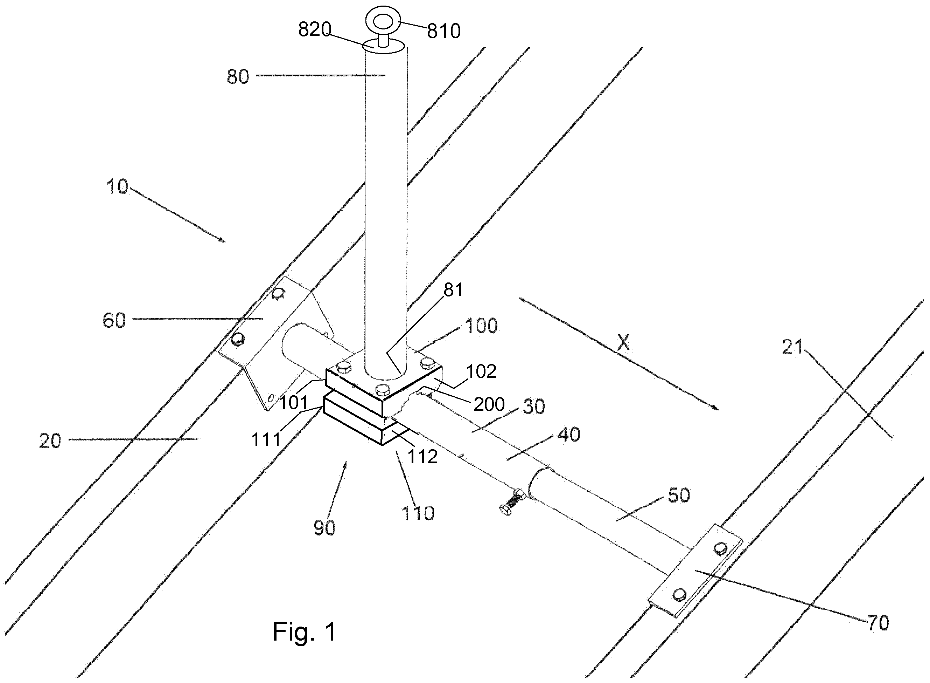

Die Figur 1 zeigt eine Befestigungseinrichtung 10 in Form einer Absturzsicherungseinrichtung, die auf zwei benachbarten parallelen Dachsparren 20 und 21 aufgeschraubt ist. Die Befestigungseinrichtung 10 weist eine Montagebasis 30 auf, die ein Außenrohr 40 und ein in dem Außenrohr 40 verschiebbar gehaltenes Innenrohr 50 umfasst. Durch Ineinanderschieben des Innenrohrs 50 und des Außenrohrs 40 lässt sich die Länge der Montagebasis 30 entlang der Längsrichtung der Rohre 40 und 50 verändern, wodurch eine Anpassung der Befestigungseinrichtung 10 an unterschiedliche Dachsparrenabstände möglich ist.

Zur Befestigung der Montagebasis 30 an den beiden Dachsparren 20 und 21 sind Befestigungselemente in Form von Winkelteilen 60 und 70 vorhanden, die ein Aufschrauben der Befestigungseinrichtung 10 auf den Dachsparren 20 und 21 ermöglichen. Anstelle der Winkelteile 60 und 70 können auch andere Arten von Befestigungselementen eingesetzt werden.

Zur Anbindung eines Anschlussrohres 80, das ein Sicherungselement der Absturzsicherungseinrichtung bildet, an der Montagebasis 30 sind Haltemittel 90 vorgesehen, die ein oberes Klemmelement 100 und ein unteres Gegenklemmelement 110 umfassen. Das obere Klemmelement 100 ist mit dem unteren Gegenklemmelement 110 mittels Schraubverbindungen verbunden, die ein Einklemmen der Montagebasis 30 zwischen dem oberen Klemmelement 100 und dem unteren Klemmelement 110 durch Festschrauben ermöglichen.

Die Figur 1 zeigt darüber hinaus eine Anschlusseinrichtung 810 in Form einer Öse, die an dem von den Haltemitteln 90 entfernten Ende des Anschlussrohres 80 - mittelbar oder unmittelbar - angebracht ist. Die Anschlusseinrichtung 810 bzw. die Öse ermöglicht das Anbringen eines externen Sicherungsmittels, beispielsweise eines Hakens oder Seils, mit dem sich eine auf dem Dach befindliche Person vor einem Absturz sichern kann.

Die Anschlusseinrichtung 810 kann an dem Anschlussrohr 80 angeschweißt oder angeschraubt sein. Bei dem Ausführungsbeispiel gemäß Figur 1 ist die Anschlusseinrichtung 810 mit einer Anschlussplatte 820 verschraubt, die an dem Anschlussrohr 80 angeschweißt ist. Bei der Anschlussplatte 820 handelt es sich vorzugsweise um eine eine Bohrung mit Innengewinde aufweisende Gewindescheibe, in die ein mit einem Außengewinde versehener Bolzenabschnitt der Anschlusseinrichtung 810 eingeschraubt ist.

Das Klemmelement 100 und das Gegenklemmelement 110 sind jeweils aus einem einteiligen Metallkörper vorzugsweise durch ein spanabhebendes Verfahren, insbesondere durch Fräsen und/oder Bohren, hergestellt worden. Mit Blick darauf, dass die Außenflächen des Klemmelements und des Gegenklemmelements mit Blick auf eine einfache Montage vorzugsweise parallel oder zumindest möglichst parallel sind, wird es als vorteilhaft angesehen, wenn das Klemmelement 100 und das Gegenklemmelement 110 jeweils aus einem einteiligen quaderförmigen, insbesondere plattenförmigen, Stahlblock durch Materialabtrag hergestellt werden.

Auf der Innenseite des Klemmelements 100 sind Stufen 200 ausgebildet, die oder zumindest deren Stufenkanten 201 nach der Montage des Klemmelements 100 an der Montagebasis 30, beispielsweise - wie in Figur 1 gezeigt - an dem Außenrohr 40, anliegen. Die Stufen 200 erstrecken sich jeweils mit vorzugsweise konstanter Stufenhöhe von einem, in der Figur 1 linken Ende 101 des Klemmelements 100 zu einem in der Figur rechten Ende 102 des Klemmelements 100. Die Erstreckungsrichtung der Stufen 200 entspricht der Längsrichtung des Klemmelements 100 (nachfolgend auch Klemmelementlängsrichtung X genannt) sowie gleichzeitig der Längsrichtung der Montagebasis 30 und damit der Längsrichtung des Außenrohres 40 und des Innenrohres 50.

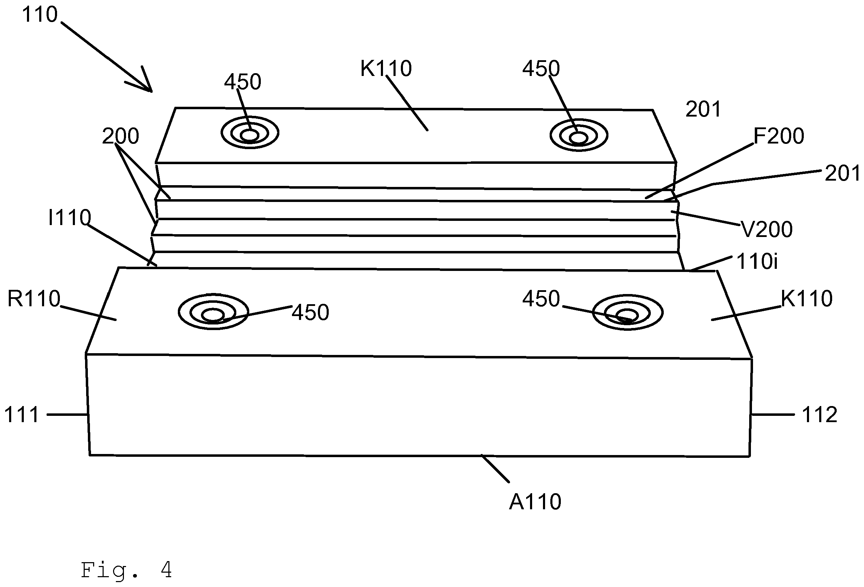

In entsprechender Weise ist auch das Gegenklemmelement 110 mit Stufen versehen, die sich mit vorzugsweise konstanter Stufenhöhe von einem in der Figur 1 linken Ende 111 des Gegenklemmelements 110 entlang der Klemmelementlängsrichtung X bis zu dem anderen Ende 112 des Gegenklemmelements 110 erstrecken; diese Stufen sind in der Figur 1 nicht erkennbar, aber in der Figur 4 dargestellt.

Die Funktion der Stufen 200 bzw. der Stufenkanten 201 der Stufen 200 besteht darin, nach einer Montage des Klemmelements 100 und des Gegenklemmelements 110 an der Montagebasis 30 ein "Einbeißen" der Stufen 200 bzw. Stufenkanten 201 in die Montagebasis 30 bzw. lokal eine plastische Deformation der Montagebasis 30 hervorzurufen, um eine besonders hohe Verdrehsicherheit bzw. Klemmkraft des Klemmelements 100 und des Gegenklemmelements 110 zwecks Verhinderung einer Drehung um die Längsachse der Montagebasis 30 herum zu erreichen.

Besonders vorteilhaft ist es, wenn durch die Stufen 200 eine solche Deformation der Montagebasis 30 erfolgt, dass das Außenrohr 40 lokal auf das Innenrohr 50 aufgepresst wird und eine Klemmverbindung zwischen dem Klemmelement 100, dem Außenrohr 40, dem Innenrohr 50 sowie dem Gegenklemmelement 110 erzielt wird.

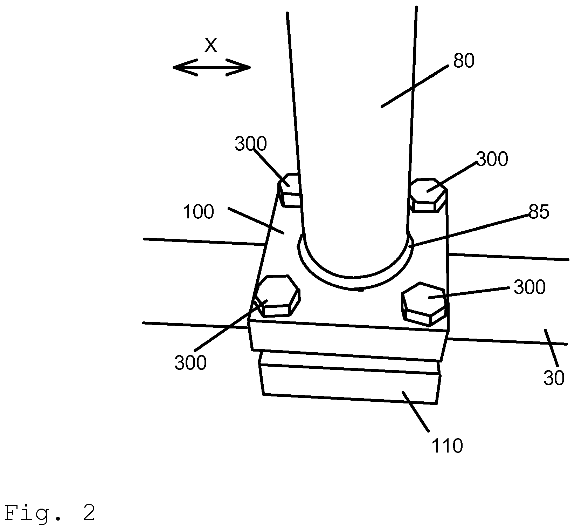

Die Figur 2 zeigt die Haltemittel 90 bzw. das Klemmelement 100 und das Gegenklemmelement 110 nochmals näher im Detail. Es lässt sich das Anschlussrohr 80 erkennen, das an dem Klemmelement 100 angeschraubt und/oder angeschweißt und/oder verklebt sein kann. In der Figur 2 ist eine Schweißnaht 85 angedeutet, die das Klemmelement 100 und das Anschlussrohr 80 verschweißt.

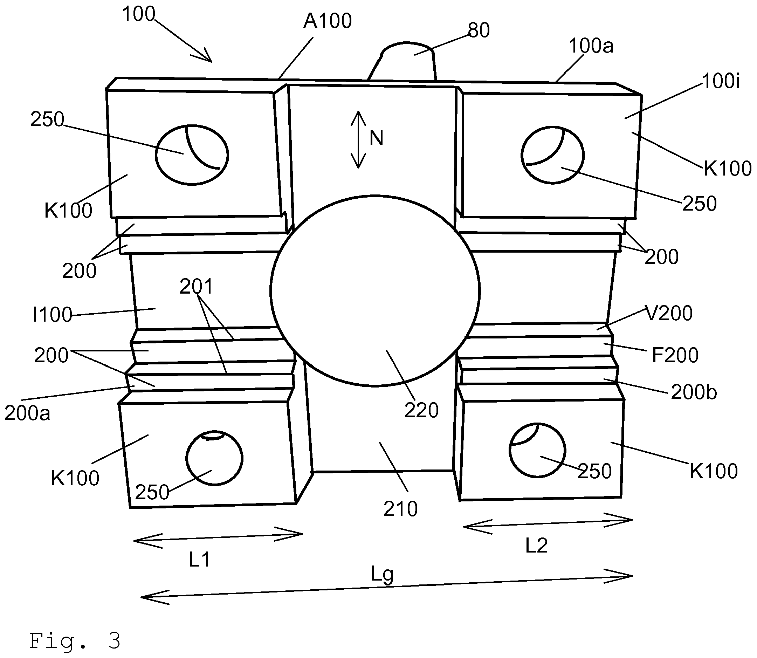

Soll das Anschlussrohr 80 angeschraubt werden, so ist es vorteilhaft, wenn ein in das Anschlussrohr 80 geschnittenes Außengewinde und das quer verlaufende Durchgangsloch 220 (siehe Figur 3) des Klemmelements ein dazu passendes, eingeschnittenes Innengewinde aufweist.

Darüber hinaus erkennt man Schrauben 300, die durch Befestigungslöcher im Klemmelement 100 hindurchgeführt und in Gewindelöcher im Gegenklemmelement 110 eingeschraubt sind, um das Klemmelement und das Gegenklemmelement auf der Montagebasis 30 aufzuklemmen.

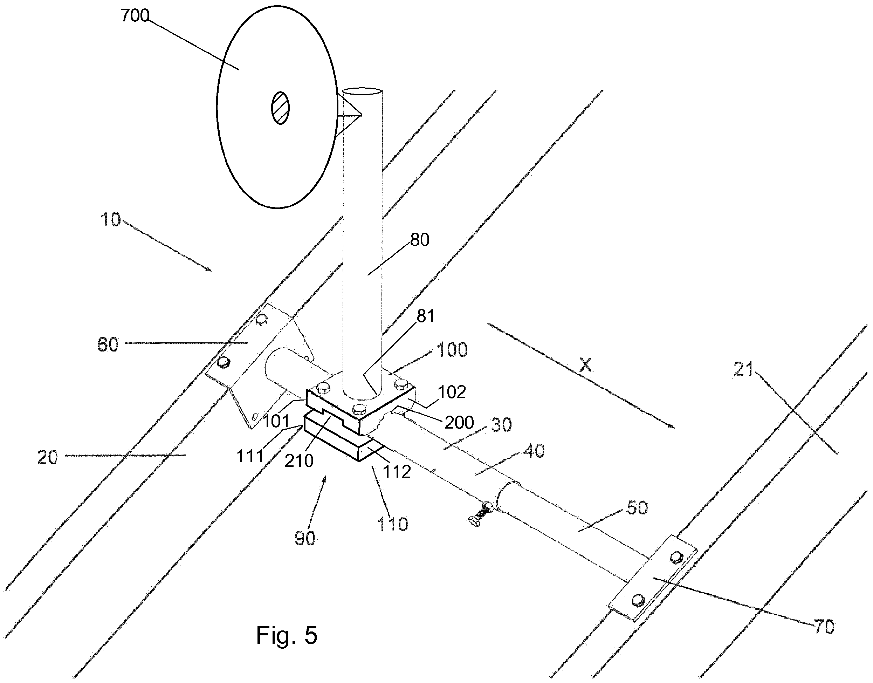

Die Figur 3 zeigt ein Ausführungsbeispiel für ein Klemmelement 100, das bei der Befestigungseinrichtung gemäß Figur 1 und 2 sowie der Befestigungseinrichtung gemäß Figur 5 eingesetzt werden kann, in einer dreidimensionalen Darstellung mit einem Blick auf die Innenseite 100i des Klemmelements 100. Es lassen sich die bereits erwähnten Stufen 200 erkennen, die sich jeweils mit konstanter Stufenhöhe von dem in der Figur 3 linken Ende 101 des Klemmelements 100 entlang der Klemmelementlängsrichtung X zu dem in der Figur 3 rechten Ende 102 des Klemmelements 100 erstrecken.

Die Stufen 200 sind jeweils durch eine quer verlaufende Nut 210 unterbrochen. Die quer verlaufende Nut 210 erstreckt sich senkrecht zur Klemmelementlängsrichtung X des Klemmelements 100 sowie auch senkrecht zur Längsrichtung des Anschlussrohres 80, also in der Figur 3 von oben nach unten. Die quer verlaufende Nut 210 wird vorzugsweise durch Fräsen oder Bohren hergestellt.

Darüber hinaus sind die Stufen 200 des Klemmelements 100 durch ein quer verlaufendes Durchgangsloch 220 unterbrochen, das sich koaxial zum Anschlussrohr 80 nach außen und somit ebenfalls senkrecht zu den Stufen 200 erstreckt, mit anderen Worten also senkrecht zur Bildebene in Figur 3 und damit auch senkrecht zur Längsrichtung bzw. Nutlängsrichtung N der quer verlaufenden Nut 210. Das quer verlaufende Durchgangsloch 220 ermöglicht ein Anbringen des Anschlussrohres 80 durch Einschrauben und/oder Ankleben und/oder Anschweißen (siehe Figur 2). Das quer verlaufende Durchgangsloch 220 wird vorzugsweise durch Fräsen oder Bohren hergestellt.

Durch die quer verlaufende Nut 210 und das quer verlaufende Durchgangsloch 220 werden die Stufen 200 also jeweils - in Klemmelementlängsrichtung X gesehen - in zwei Stufenabschnitte unterteilt, von denen der in der Figur 3 links liegende Stufenabschnitt mit dem Bezugszeichen 200a und der in der Figur 3 rechts liegende Stufenabschnitt mit dem Bezugszeichen 200b gekennzeichnet ist.

Die Längen der Stufenabschnitte 200a und 200b entlang der Klemmelementlängsrichtung X sind in der Figur 3 mit den Bezugszeichen L1 und L2 gekennzeichnet.

Um eine möglichst große Klemmkraft des Klemmelements 100 auf der Montagebasis 30 gemäß Figur 1 zu ermöglichen, ist die Länge der Stufen 200 entlang der Klemmelementlängsrichtung X möglichst groß. Die Gesamtlänge LL der Stufen 200, die sich bei dem Ausführungsbeispiel gemäß Figur 3 durch die Einzellängen L1 und L2 der Stufenabschnitte 200a und 200b zusammensetzt, beträgt vorzugsweise mindestens 50 % der gesamten Klemmelementlänge Lg in Klemmelementlängsrichtung. Es gilt also vorzugsweise:

$$LL = L1 + L2 \geq K * Lg,$$

wobei K eine Konstante ist, die vorzugsweise mindestens 50 % bzw. mindestens 0,5 beträgt.

Entsprechendes gilt, wenn die Stufen 200 jeweils mehrere Unterbrechungsstellen wie Nuten oder Löcher aufweisen; in diesen Fällen ergibt sich die Gesamtlänge LL der Stufen 200 ebenfalls durch Addition der Einzellängen L1 bis Ln (bei n Einzelängen bzw. n Stufenabschnitten) und es gilt vorzugsweise:

$$LL = L1 + L2 + ... + Ln \geq K * Lg$$

In der Figur 3 lassen sich darüber hinaus Befestigungslöcher 250 erkennen, die ein Hindurchführen der in der Figur 2 gezeigten Schrauben 300 ermöglichen, um das Klemmelement 100 gemäß Figur 3 mit dem Gegenklemmelement 110 gemäß den Figuren 1 und 2 zu verschrauben.

Als besonders vorteilhaft wird es angesehen, wenn die Klemmelementlänge Lg bzw. der Gesamtabstand zwischen den Enden 101 und 102 des Klemmelements 100 zwischen 10 cm und 15 cm beträgt. Bei einer solchen Gesamtlänge des Klemmelements 100 bzw. bei einem solchen Gesamtabstand ist es vorteilhaft, wenn die Gesamtlänge LL der Stufen 200 - abzüglich von Unterbrechungen wie beispielsweise der quer verlaufenden Nut 210 und des quer verlaufenden Durchgangslochs 220 in der Figur 3 - jeweils mindestens 6 cm beträgt.

Besonders vorteilhaft ist es, wenn sich die Stufen 200 des Klemmelements 100 über eine Länge zwischen 3 cm und 6 cm von dem Ende 101 des Klemmelements 100 bis zur quer verlaufenden Nut 210 bzw. zum quer verlaufenden Durchgangsloch 220 und über eine Länge zwischen 3 cm und 6 cm von der quer verlaufenden Nut 210 bzw. dem quer verlaufenden Durchgangsloch 220 zu dem anderen Ende 102 des Klemmelements 100 erstrecken.

Die Figur 4 zeigt ein Ausführungsbeispiel für ein Gegenklemmelement 110, das bei der Befestigungseinrichtung gemäß Figur 1 und 2 sowie der Befestigungseinrichtung gemäß Figur 5 eingesetzt werden kann, näher im Detail in einer dreidimensionalen Darstellung schräg von der Seite. Es lassen sich Stufen 200 erkennen, die durch Materialabtrag auf der Innenseite 110i des Gegenklemmelements 110 herausgearbeitet worden sind und sich jeweils mit vorzugsweise konstanter Stufenhöhe von dem in der Figur 4 linken Ende 111 entlang der Klemmelementlängsrichtung X zu dem in der Figur 4 rechten Ende 112 des Gegenklemmelements 110 erstrecken.

Besonders vorteilhaft ist es, wenn sich die Stufen 200 bei dem Gegenklemmelement 110 unterbrechungsfrei zwischen den beiden Enden 111 und 112 erstrecken.

Falls Nuten oder Unterbrechungen die Stufen in dem Gegenklemmelement 110 unterbrechen, so ist es vorteilhaft, wenn zumindest die Gesamtlänge einer jeden Stufe, die sich durch die Einzellängen der resultierenden Stufenabschnitte ergibt (siehe Ausführungen oben im Zusammenhang mit der Figur 3 und den Stufen im Klemmelement 100), jeweils zumindest 50 % des Gesamtabstands zwischen den beiden Enden 111 und 112 des Gegenklemmelements beträgt.

Die Länge Lg des Gegenklemmelements 110 entlang der Klemmelementlängsrichtung X bzw. der Gesamtabstand zwischen den beiden Enden 111 und 112 des Gegenklemmelements 110 beträgt vorzugsweise zwischen 10 und 15 cm.

Im Randbereich R110 des Gegenklemmelements 110 sind vorzugsweise Gewindelöcher 450 vorhanden, die von ihrer Anordnung her mit den Befestigungslöchern 250 im Klemmelement 100 fluchten, sobald das Klemmelement und das Gegenklemmelement bestimmungsgemäß verschraubt werden. Die Gewindelöcher 450 sind somit geeignet, ein Einschrauben der Schrauben 300 gemäß Figur 2 und damit ein Verschrauben des Gegenklemmelements 110 mit dem Klemmelement 100 gemäß Figur 2 zu ermöglichen. Die Gewindelöeher 450 sind durch ein Gewindeschneideverfahren in das Gegenklemmelement 110 eingeschnitten.

Wie bereits oben erwähnt, werden das Klemmelement 100 und das Gegenklemmelement 110 vorzugsweise jeweils aus einem einteiligen quaderförmigen, insbesondere plattenförmigen, Stahlblock durch Materialabtrag hergestellt. Mit Blick auf eine einfache Herstellung wird es als vorteilhaft angesehen, wenn bei dem Klemmelement 100 die Stufenflächen F200 der Stufen 200 nach dem Materialabtrag parallel zur am weitesten innenliegenden Innenfläche I100 des Klemmelements, parallel zur Außenfläche A100, an der das Anschlussrohr angebracht ist, und parallel zu den Anschlussflächen K100, durch die die Befestigungslöcher 250 hindurchgeführt sind, liegen.

Bei dem Gegenklemmelement 110 liegen die Stufenflächen F200 der Stufen 200 nach dem Materialabtrag dementsprechend ebenfalls vorzugsweise parallel zur innenliegenden Innenfläche I110 des Gegenklemmelements 110, parallel zur Außenfläche A110 des Gegenklemmelements 110 und parallel zu den Anschlussflächen K110, in die die Gewindelöcher 450 eingeschnitten sind.

Nach der Montage und dem Verschrauben von Klemmelement 100 und Gegenklemmelement 110 ergibt sich somit vorzugsweise, dass die Stufenflächen F200 aller Stufen 200 des Klemmelements 100 und des Gegenklemmelements 110

- parallel zur innenliegenden Innenfläche I100 des Klemmelements 100,

- parallel zur Außenfläche A100 des Klemmelements 100,
- parallel zu den Anschlussflächen K100, durch die die Befestigungslöcher 250 hindurchgeführt sind,
- parallel zur innenliegenden Innenfläche I110 des Gegenklemmelements 110,
- parallel zur Außenfläche A110 des Gegenklemmelements 110 und
- parallel zu den Anschlussflächen K110, in die die Gewindelöcher 450 eingeschnitten sind,

liegen.

An den Stufenkanten 201 sind die Stufen 200 vorzugsweise jeweils rechtwinklig; an die oberen Stufenflächen F200 schließt sich somit also vorzugsweise jeweils eine dazu senkrechte Stufenfläche V200 an, die bei dem Klemmelement 100 jeweils

- senkrecht zur innenliegenden Innenfläche I100 des Klemmelements 100,

- senkrecht zur Außenfläche A100 des Klemmelements 100 und

- senkrecht zu den Anschlussflächen K100, durch die die Befestigungslöcher 100 hindurchgeführt sind,

liegt.

Bei dem Gegenelement 110 liegen die senkrechten Stufenfläche V200

- senkrecht zur innenliegenden Innenfläche I110 des Gegenklemmelements 110,

- senkrecht zur Außenfläche A110 des Gegenklemmelements 110 und

- senkrecht zu den Anschlussflächen K110, in die die Gewindelöcher 450 eingeschnitten sind.

Nach der Montage des Klemmelements 100 und des Gegenklemmelements 110 ergibt sich damit in vorteilhafter Weise eine Konfiguration, bei der alle senkrechten Stufenflächen V200 des Klemmelements 100 und des Gegenklemmelements 110 jeweils

- senkrecht zur innenliegenden Innenfläche I100 des Klemmelements 100,

- senkrecht zur Außenfläche A100 des Klemmelements 100,

- senkrecht zu den Anschlussflächen K100 des Klemmelements 100, durch die die Befestigungslöcher 250 hindurchgeführt sind,

- senkrecht zur innenliegenden Innenfläche I110 des Gegenklemmelements 110,

- senkrecht zur Außenfläche A110 des Gegenklemmelements 110 und

- senkrecht zu den Anschlussflächen K110 des Gegenklemmelements 110, in die die Gewindelöcher 450 eingeschnitten sind,

liegen.

Die Figur 5 zeigt ein Ausführungsbeispiel für eine Befestigungseinrichtung 10, bei der es sich um einen Antennenhalter handelt. Die Befestigungseinrichtung 10 gemäß Figur 5 kann vom Aufbau her mit der Befestigungseinrichtung 10 gemäß den Figuren 1 bis 2 weitgehend baugleich sein, Unterschiede bestehen bei der Variante gemäß Figur 5 u. a. darin, dass bei der Befestigungseinrichtung 10 gemäß Figur 5 die in der Figur 1 dargestellte Anschlusseinrichtung 810 sowie die in der Figur 1 dargestellte Anschlussplatte 820 fehlen können und dass an dem Anschlussrohr 80 eine Antenne 700, bei der es sich beispielsweise um eine Satellitenantenne handeln kann, angebracht ist.

Mit anderen Worten können die Montagebasis 30 (mit dem Außenrohr 40 und dem Innenrohr 50), die Winkelteile 60 und 70 und die Haltemittel 90 mit dem oberen Klemmelement 100 und dem unteren Gegenklemmelement 110 bei der Befestigungseinrichtung 10 gemäß Figur 5 mit den entsprechenden Komponenten der Befestigungseinrichtung 10 gemäß den Figuren 1 und 2 bzw. den Komponenten gemäß den Figuren 3 und 4 identisch sein. Bezüglich der Ausgestaltung dieser Komponenten sei deshalb auf die obigen Ausführungen im Zusammenhang mit den Figuren 1 bis 4 verwiesen.

Um ein Eindringen von Wasser in das Anschlussrohr 80 zu vermeiden, kann auf dem der Montagebasis 30 abgewandten Ende des Rohres 80 ein Verschlussdeckel oder dergleichen angebracht sein.

Ergänzend sei erwähnt, dass die quer verlaufende Nut 210 in dem Klemmelement (siehe Figur 3) im Falle eines Einsatzes der Befestigungseinrichtung 10 als Antennenhalter in vorteilhafter Weise zum Hindurchführen eines Antennenkabels genutzt werden kann, das von der Antenne 700 durch das Innere des Anschlussrohres 80 und nach Umbiegen um 90 Grad durch die quer verlaufende Nut 210 hindurch nach außen geführt werden.

Im Falle eines Einsatzes der Befestigungseinrichtung 10 als Absturzsicherung (siehe Figuren 1 und 2) kann die quer verlaufende Nut 210 (siehe Figur 3) im Klemmelement 100 im Übrigen auch entfallen (siehe Darstellung in den Figuren 1 und 2), wodurch der Herstellungsaufwand beim Herstellen des Klemmelements 100 reduziert wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie er in den Ansprüchen definiert wird, zu verlassen.

Bezugszeichenliste

| | |
|------|-----|
| 10 | Befestigungseinrichtung |
| 20 | Dachsparren |
| 21 | Dachsparren |
| 30 | Montagebasis |
| 40 | Außenrohr |
| 50 | Innenrohr |
| 60 | Winkelteil |
| 70 | Winkelteil |
| 80 | Anschlussrohr |
| 85 | Schweißnaht |
| 90 | Haltemittel |
| 100 | Klemmelement |
| 100i | Innenseite |
| 101 | Ende |
| 102 | Ende |
| 110 | Gegenklemmelement |
| 110i | Innenseite |
| 111 | Ende |
| 112 | Ende |
| 200 | Stufen |
| 200a | Stufenabschnitt |
| 200b | Stufenabschnitt |
| 201 | Stufenkante |
| 210 | Nut |
| 220 | Durchgangsloch |
| 250 | Befestigungslöcher |
| 300 | Schrauben |
| 450 | Gewindelöcher |
| 700 | Antenne |
| 810 | Anschlusseinrichtung |
| 820 | Anschlussplatte |
| A100 | Außenfläche |
| A110 | Außenfläche |
| F200 | Stufenfläche |
| I100 | innenliegende Innenfläche |
| I110 | innenliegende Innenfläche |
| K100 | Anschlussfläche |
| K110 | Anschlussfläche |
| Lg | Klemmelementlänge |
| LL | Stufengesamtlänge |
| L1 | Länge |
| L2 | Länge |

N        Nutlängsrichtung
R110     Randbereich
V200     Stufenfläche
X        Klemmelementlängsrichtung

**Patentansprüche**

1.  Verfahren zum Herstellen einer Befestigungseinrichtung (10), die zur Montage an zwei Dachsparren (20, 21) geeignet ist, wobei bei dem Verfahren

    - eine Montagebasis (30) hergestellt wird, die teleskopierbar ausgeführt und längenmäßig verstellbar ist,
    - zur Anbindung eines Anschlussrohres (80) an der Montagebasis (30) Haltemittel (90) vorgesehen werden, die ein Klemmelement (100) und ein Gegenklemmelement (110) umfassen,
    - das Klemmelement (100) und das Gegenklemmelement (110) hergestellt werden, die derart miteinander verbindbar sind, dass das Klemmelement (100) und das Gegenklemmelement (110) nach der Montage der Befestigungseinrichtung (10) einen Abschnitt der Montagebasis (30) zwischen sich einklemmen,
    - wobei das Klemmelement (100) aus einem einteiligen Metallkörper hergestellt wird und
    - wobei auf der Innenseite des Klemmelements (100) Stufen (200) gebildet werden, die oder zumindest deren Stufenkanten (201) nach der Montage des Klemmelements (100) an der Montagebasis (30) anliegen,

    **dadurch gekennzeichnet, dass**

    - auf der Innenseite des Klemmelements (100) durch Materialabtrag Stufen (200) herausgearbeitet werden, die sich mit konstanter Stufenhöhe von einem Ende des Klemmelements (100) entlang der Klemmelementlängsrichtung (X) zu dem anderen Ende des Klemmelements (100) erstrecken,
    - wobei sich die Stufen (200) durchgehend von dem einen Ende des Klemmelements (100) zu dem anderen Ende erstrecken oder - im Falle von Unterbrechungen wie beispielsweise querverlaufenden Nuten oder eines querverlaufenden Durchgangslochs - zumindest über eine Länge von mindestens 30 % des Gesamtabstandes zwischen den beiden Enden (101, 102) des Klemmelements (100).

2.  Verfahren nach Anspruch 1,
    **dadurch gekennzeichnet, dass**
    das Klemmelement (100) und/oder das Gegenklemmelement (110) aus einem einteiligen quaderförmigen, insbesondere plattenförmigen, Stahlblock durch Materialabtrag mittels eines spanabhebenden Verfahrens hergestellt wird.

3.  Verfahren nach einem der voranstehenden Ansprüche,
    **dadurch gekennzeichnet, dass**
    auf der Innenseite des Gegenklemmelements (110) durch den Materialabtrag Stufen (200) herausgearbeitet werden, die sich jeweils mit konstanter Stufenhöhe von einem Ende des Gegenklemmelements (110) - entlang einer Richtung, die nach der Montage des Gegenklemmelements (110) an der Montagebasis (30) der Längsrichtung der Montagebasis (30) entspricht und nachfolgend Klemmelementlängsrichtung (X) genannt wird - bis zu dem anderen Ende des Gegenklemmelements (110) erstrecken, und zwar durchgehend oder - im Falle von Unterbrechungen wie beispielsweise querverlaufenden Nuten - zumindest über eine Länge von mindestens 50 % des Gesamtabstandes zwischen den beiden Enden (111, 112) des Gegenklemmelements (110).

4.  Verfahren nach einem der voranstehenden Ansprüche,
    **dadurch gekennzeichnet, dass**

    - die Befestigungseinrichtung (10) eine Absturzsicherungseinrichtung und das Anschlussrohr (80) ein Sicherungselement der Absturzsicherungseinrichtung bildet,
    - eine Anschlusseinrichtung (810) in Form einer Öse an dem von den Haltemitteln (90) entfernten Ende des Anschlussrohres (80) - mittelbar oder unmittelbar - angebracht ist und
    - die Anschlusseinrichtung (810) das Anbringen eines externen Sicherungsmittels ermöglicht, mit dem sich eine auf einem Dach befindliche Person vor einem Absturz sichern kann.

5.  Verfahren nach einem der voranstehenden Ansprüche,

**dadurch gekennzeichnet, dass**

- der Gesamtabstand zwischen den beiden Enden des Gegenklemmelements (110) und der Gesamtabstand zwischen den beiden Enden des Klemmelements (100) jeweils zwischen 10 und 15 cm beträgt,
- wobei sich die Stufen (200) des Klemmelements (100) über eine Länge von mindestens 3 cm, vorzugsweise zwischen 3 cm und 6 cm, von dem einen Ende des Klemmelements (100) bis zu einer Unterbrechung, insbesondere in Form eines querverlaufenden Durchgangslochs oder einer querverlaufenden Nut (210), und über eine Länge von mindestens 3 cm, vorzugsweise zwischen 3 cm und 6 cm, von der Unterbrechung bis zum anderen Ende erstrecken, und
- wobei die Stufen (200) des Gegenklemmelements (110) - abzüglich von etwaigen Unterbrechungen wie querverlaufenden Nuten - jeweils eine Länge von mindestens 8 cm aufweisen.

6. Verfahren nach einem der voranstehenden Ansprüche,
**dadurch gekennzeichnet, dass**

- durch Materialabtrag im Klemmelement (100) ein Durchgangsloch (220) hergestellt wird, das sich senkrecht von der Außenseite des Klemmelements (100) bis zur Innenseite und senkrecht zu den Stufen (200) erstreckt, und
- auf der Innenseite des Klemmelements (100) durch Materialabtrag Stufen (200) herausgearbeitet werden, die sich von einem Ende des Klemmelements (100) - entlang der Klemmelementlängsrichtung (X) - bis zu dem Durchgangsloch (220) erstrecken, von dem Durchgangsloch (220) unterbrochen werden und sich von dem Durchgangsloch (220) zu dem anderen Ende des Klemmelements (100) erstrecken.

7. Verfahren nach einem der voranstehenden Ansprüche,
**dadurch gekennzeichnet, dass**

- durch Materialabtrag auf der Innenseite des Klemmelements (100) zumindest eine Nut (210) hergestellt wird, die sich senkrecht zur Klemmelementlängsrichtung (X) erstreckt, und
- auf der Innenseite des Klemmelements (100) durch Materialabtrag solche Stufen (200) herausgearbeitet werden, die sich von einem Ende des Klemmelements (100) - entlang der Klemmelementlängsrichtung - bis zu der zumindest einen Nut (210) erstrecken, von der zumindest einen Nut (210) unterbrochen werden und sich von der Nut (210) zu dem anderen Ende des Klemmelements (100) oder einer benachbarten weiteren Nut (210) jeweils mit konstanter Stufenhöhe erstrecken.

8. Verfahren nach einem der voranstehenden Ansprüche,
**dadurch gekennzeichnet, dass**

- auf der Innenseite des Klemmelements (100) durch Materialabtrag Stufen (200) herausgearbeitet worden sind, die sich von einem Ende des Klemmelements (100) durchgehend bis zu dem anderen Ende des Klemmelements (100) erstrecken,
- das Durchgangsloch (220) und/oder die Nut (210) hergestellt wird, nachdem die Stufen (200) herausgearbeitet worden sind, und
- die Nut (210) und/oder das Durchgangsloch (220) die Stufen (200) unterbrechen.

9. Verfahren nach einem der voranstehenden Ansprüche,
**dadurch gekennzeichnet, dass**
das Klemmelement (100) und/oder das Gegenklemmelement (110) aus dem einteiligen Metallkörper durch ein spanabhebendes Verfahren hergestellt wird.

10. Verfahren nach einem der voranstehenden Ansprüche,
**dadurch gekennzeichnet, dass**
die Stufen (200) durch Fräsen hergestellt werden und
das Durchgangsloch (220) durch Fräsen oder Bohren hergestellt wird.

11. Verfahren nach einem der voranstehenden Ansprüche,
**dadurch gekennzeichnet, dass**
in das Durchgangsloch (220) ein Rohrende eines Rohres eingesetzt und dort befestigt, insbesondere eingeschraubt und/oder eingeschweißt, wird.

**12.** Verfahren nach einem der voranstehenden Ansprüche,
**dadurch gekennzeichnet, dass**

- in einem Randbereich des Klemmelements (100) zumindest ein Befestigungsloch (250) hergestellt wird, das ein Durchführen eines Schraubelements, insbesondere einer Gewindestange oder einer Schraube, ermöglicht und
- in einem Randbereich des Gegenklemmelements (110) zumindest ein Gewindeloch (450) hergestellt wird, das ein Einschrauben des Schraubelements und ein Verschrauben des Klemmelements (100) mit dem Gegenklemmelement (110) mittels des Schraubelements ermöglicht.

**13.** Verfahren nach einem der voranstehenden Ansprüche,
**dadurch gekennzeichnet, dass**
als Befestigungseinrichtung (10) eine Absturzsicherungseinrichtung oder ein Antennenhalter hergestellt wird.

**14.** Befestigungseinrichtung (10), die zur Montage an zwei Dachsparren (20, 21) geeignet ist, mit

- einer Montagebasis (30), die teleskopierbar ausgeführt und längenmäßig verstellbar ist,
- einem Klemmelement (100) und
- einem Gegenklemmelement (110), das mit dem Klemmelement (100) derart verbindbar ist, dass das Klemmelement (100) und das Gegenklemmelement (110) einen Abschnitt der Montagebasis (30) einklemmen können,

**dadurch gekennzeichnet, dass**

- das Klemmelement (100) und/oder das Gegenklemmelement (110) jeweils aus einem einteiligen Metallkörper bestehen,
- wobei auf der Innenseite des Klemmelements (100) und/oder des Gegenklemmelements (110) Stufen (200) vorhanden sind, deren Stufenkanten (201) nach der Montage des Klemmelements (100) und des Gegenklemmelements (110) an der Montagebasis (30) anliegen und
- wobei sich die Stufen (200) von dem einen Ende des Klemmelements (100) bzw. des Gegenklemmelements (110) - entlang der Klemmelementlängsrichtung (X) - zu dem jeweils anderen Ende erstrecken, und zwar durchgehend oder zumindest über eine Länge von mindestens 30% des Gesamtabstandes zwischen den beiden Endes des Klemmelements (100) bzw. Gegenklemmelements (110) .

**15.** Befestigungseinrichtung (10) nach Anspruch 14,
**dadurch gekennzeichnet, dass**

- die Befestigungseinrichtung (10) eine Absturzsicherungseinrichtung und das Anschlussrohr (80) ein Sicherungselement der Absturzsicherungseinrichtung bildet,
- eine Anschlusseinrichtung (810) in Form einer Öse an dem von den Haltemitteln (90) entfernten Ende des Anschlussrohres (80) - mittelbar oder unmittelbar - angebracht ist und
- die Anschlusseinrichtung (810) das Anbringen eines externen Sicherungsmittels, beispielsweise eines Hakens oder Seils, ermöglicht, mit dem sich eine auf einem Dach befindliche Person vor einem Absturz sichern kann.

**Claims**

**1.** Method for producing a fastening device (10) that is suitable for mounting on two rafters (20, 21), wherein, in the method,

- a mounting base (30) is produced, which is embodied in a telescopic manner and is longitudinally adjustable,
- for attaching a connection pipe (80) to the mounting base (30), retaining means (90) are provided, which comprise a clamping element (100) and a mating clamping element (110),
- the clamping element (100) and the mating clamping element (110) are produced, which are connectable together such that the clamping element (100) and the mating clamping element (110) clamp a portion of the mounting base (30) between one another after the fastening device (10) has been mounted,
- wherein the clamping element (100) is produced from a one-piece metal body, and
- wherein, on the inner side of the clamping element (100), steps (200) are formed, which, or at least the step edges (201) of which, bearing against the mounting base (30) after the clamping element (100) has been mounted,

**characterized in that**,

- on the inner side of the clamping element (100), steps (200) are cut out by material removal, which extend with a constant step height from one end of the clamping element (100) to the other end of the clamping element (100) in the clamping-element longitudinal direction (X),
- wherein the steps (200) extend continuously from one end of the clamping element (100) to the other end, or
- in the case of interruptions, for example transversely extending grooves or a transversely extending through-hole - at least along a length of at least 30% of the total distance between the two ends (101, 102) of the clamping element (100).

2. Method according to Claim 1,
**characterized in that**
the clamping element (100) and/or the mating clamping element (110) are produced from a one-piece cuboidal, in particular plate-form, steel block by material removal by means of a machining method.

3. Method according to either of the preceding claims,
**characterized in that**,
on the inner side of the mating clamping element (110), steps (200) are cut out by material removal, which extend in each case with a constant step height from one end of the mating clamping element (110) - in a direction that corresponds to the longitudinal direction of the mounting base (30) after the mating clamping element (110) has been mounted on the mounting base (30) and is subsequently referred to as the clamping-element longitudinal direction (X) - as far as the other end of the mating clamping element (110), specifically continuously or - in the case of interruptions, for example transversely extending grooves - at least along a length of at least 50% of the total distance between the two ends (111, 112) of the mating clamping element (110).

4. Method according to one of the preceding claims, **characterized in that**

- the fastening device (10) forms a fall protection device and the connection pipe (80) forms a securing element of the fall protection device,
- a connection device (810) in the form of an eye is attached - indirectly or directly - to that end of the connection pipe (80) that is remote from the retaining means (90), and
- the connection device (810) allows the attachment of an external securing means, with which a person located on a roof can secure themselves against falling.

5. Method according to one of the preceding claims,
**characterized in that**

- the total distance between the two ends of the mating clamping element (110) and the total distance between the two ends of the clamping element (100) is in each case between 10 and 15 cm,
- wherein the steps (200) of the clamping element (100) extend along a length of at least 3 cm, preferably between 3 cm and 6 cm, from one end of the clamping element (100) as far as an interruption, in particular in the form of a transversely extending through-hole or of a transversely extending groove (210), and along a length of at least 3 cm, preferably between 3 cm and 6 cm, from the interruption as far as the other end, and
- wherein the steps (200) of the mating clamping element (110) - minus any interruptions such as transversely extending grooves - each have a length of at least 8 cm.

6. Method according to one of the preceding claims,
**characterized in that**

- a through-hole (210) is produced in the clamping element (100) by material removal, said through-hole extending perpendicularly from the outer side of the clamping element (100) to the inner side and perpendicularly to the steps (200), and,
- on the inner side of the clamping element (100), steps (200) are cut out by material removal, which extend - in the clamping-element longitudinal direction (X) - from one end of the clamping element (100) as far as the through-hole (220), are interrupted by the through-hole (220) and extend from the through-hole (220) to the other end of the clamping element (100).

7. Method according to one of the preceding claims,
   **characterized in that**

   - at least one groove (210) is produced by material removal on the inner side of the clamping element (100), said groove extending perpendicularly to the clamping-element longitudinal direction (X), and,
   - on the inner side of the clamping element (100), such steps (200) are cut out by material removal, which extend
   - in the clamping-element longitudinal direction - from one end of the clamping element (100) as far as the at least one groove (210), are interrupted by the at least one groove (210) and extend in each case with a constant step height from the groove (210) to the other end of the clamping element (100) or an adjacent further groove (210).

8. Method according to one of the preceding claims,
   **characterized in that**,

   - on the inner side of the clamping element (100), steps (200) have been cut out by material removal, which extend continuously from one end of the clamping element (100) to the other end of the clamping element (100),
   - the through-hole (220) and/or the groove (210) are produced after the steps (200) have been cut out, and
   - the groove (210) and/or the through-hole (220) interrupt the steps (200).

9. Method according to one of the preceding claims,
   **characterized in that**
   the clamping element (100) and/or the mating clamping element (110) are produced from the one-piece metal body by a machining method.

10. Method according to one of the preceding claims,
    **characterized in that**
    the steps (200) are produced by milling and the through-hole (220) is produced by milling or drilling.

11. Method according to one of the preceding claims,
    **characterized in that**
    a pipe end of a pipe is inserted into the through-hole (220) and fastened there, in particular screwed in and/or welded in.

12. Method according to one of the preceding claims,
    **characterized in that**,

    - in a peripheral region of the clamping element (100), at least one fastening hole (250) is produced, which allows a screw element, in particular a threaded rod or a screw, to be passed through, and,
    - in a peripheral region of the mating clamping element (110), at least one threaded hole (450) is produced, which allows the screw element to be screwed in and the clamping element (100) to be screwed together with the mating clamping element (110) by means of the screw element.

13. Method according to one of the preceding claims,
    **characterized in that**
    a fall protection device or an antenna holder is produced as fastening device (10).

14. Fastening device (10) that is suitable for mounting on two rafters (20, 21), having

    - a mounting base (30) that is embodied in a telescopic manner and is longitudinally adjustable,
    - a clamping element (100), and
    - a mating clamping element (110), which is connectable to the clamping element (100) such that the clamping element (100) and the mating clamping element (110) can clamp a portion of the mounting base (30),

    **characterized in that**

    - the clamping element (100) and/or the mating clamping element (110) each consist of a one-piece metal body,
    - wherein, on the inner side of the clamping element (100) and/or of the mating clamping element (110), steps (200) are present, the step edges (201) of which bear against the mounting base (30) after the clamping element (100) and the mating clamping element (110) have been mounted, and
- wherein the steps (200) extend - in the clamping-element longitudinal direction (X) - from one end of the clamping element (100) or of the mating clamping element (110) to the other end in each case, specifically continuously or at least along a length of at least 30% of the total distance between the two ends of the clamping element (100) and of the mating clamping element (110), respectively.

15. Fastening device (10) according to Claim 14,
   **characterized in that**

   - the fastening device (10) forms a fall protection device and the connection pipe (80) forms a securing element of the fall protection device,
   - a connection device (810) in the form of an eye has been attached - indirectly or directly - to that end of the connection pipe (80) that is remote from the retaining means (90), and
   - the connection device (810) allows the attachment of an external securing means, for example a hook or rope, with which a person located on a roof can secure themselves against falling.


**Revendications**

1. Procédé de fabrication d'un dispositif de fixation (10) approprié pour le montage sur deux chevrons (20, 21), dans lequel procédé

   - une base de montage (30) est fabriquée, laquelle est réalisée de manière télescopique et peut être réglée en longueur,
   - pour la liaison d'un tube de raccordement (80) à la base de montage (30), des moyens de retenue (90) sont prévus, lesquels comprennent un élément de serrage (100) et un élément de contre-serrage (110),
   - l'élément de serrage (100) et l'élément de contre-serrage (110) sont fabriqués, lesquels peuvent être connectés l'un à l'autre de telle sorte que l'élément de serrage (100) et l'élément de contre-serrage (110), après le montage du dispositif de fixation (10), serrent entre eux une portion de la base de montage (30),
   - l'élément de serrage (100) étant fabriqué à partir d'un corps métallique d'une seule pièce et
   - sur le côté intérieur de l'élément de serrage (100) étant formés des gradins (200) qui s'appliquent, ou au moins dont les arêtes de gradins (201) s'appliquent, après le montage de l'élément de serrage (100), contre la base de montage (30),

   **caractérisé en ce que**

   - sur le côté intérieur de l'élément de serrage (100), des gradins (200) sont usinés par enlèvement de matière, lesquels s'étendent avec une hauteur de gradin constante depuis une extrémité de l'élément de serrage (100) le long de la direction longitudinale (X) de l'élément de serrage jusqu'à l'autre extrémité de l'élément de serrage (100),
   - les gradins (200) s'étendant en continu depuis l'une des extrémités de l'élément de serrage (100) jusqu'à l'autre extrémité ou, dans le cas d'interruptions comme par exemple des rainures s'étendant transversalement ou un trou traversant s'étendant transversalement, s'étendant au moins sur une longueur d'au moins 30 % de la distance totale entre les deux extrémités (101, 102) de l'élément de serrage (100) .

2. Procédé selon la revendication 1,
   **caractérisé en ce que**
   l'élément de serrage (100) et/ou l'élément de contre-serrage (110) sont fabriqués à partir d'un bloc d'acier d'une seule pièce parallélépipédique, en particulier en forme de plaque, par enlèvement de matière au moyen d'un procédé d'usinage par enlèvement de copeaux.

3. Procédé selon l'une quelconque des revendications précédentes,
   **caractérisé en ce que**
   sur le côté intérieur de l'élément de contre-serrage (110,) des gradins (200) sont usinés par enlèvement de matière, lesquels s'étendent à chaque fois avec une hauteur de gradin constante depuis une extrémité de l'élément de contre-serrage (110) le long d'une direction qui, après le montage de l'élément de contre-serrage (110) sur la base de montage (30), correspond à la direction longitudinale de la base de montage (30) et est appelée ci-après direction longitudinale (X) de l'élément de serrage, jusqu'à l'autre extrémité de l'élément de contre-serrage (110), et ce en continu ou, dans le cas d'interruptions comme par exemple des rainures s'étendant transversalement, s'étendent au moins sur une longueur d'au moins 50 % de la distance totale entre les deux extrémités (111, 112) de l'élément de contre-serrage (110).

**4.** Procédé selon l'une quelconque des revendications précédentes, **caractérisé en ce que**

- le dispositif de fixation (10) forme un dispositif de protection contre les chutes et le tube de raccordement (80) forme un élément de fixation du dispositif de protection contre les chutes,
- un dispositif de raccordement (810) en forme d'œillet est monté, directement ou indirectement, au niveau de l'extrémité du tube de raccordement (80) éloignée des moyens de retenue (90), et
- le dispositif de raccordement (810) permet le montage d'un moyen de fixation externe avec lequel une personne se trouvant sur un toit peut se protéger contre une chute.

**5.** Procédé selon l'une quelconque des revendications précédentes, **caractérisé en ce que**

- la distance totale entre les deux extrémités de l'élément de contre-serrage (110) et la distance totale entre les deux extrémités de l'élément de serrage (100) est à chaque fois comprise entre 10 et 15 cm,
- les gradins (200) de l'élément de serrage (100) s'étendant sur une longueur d'au moins 3 cm, de préférence comprise entre 3 cm et 6 cm, depuis l'une des extrémités de l'élément de serrage (100) jusqu'à une interruption, en particulier sous la forme d'un trou traversant s'étendant transversalement ou d'une rainure s'étendant transversalement (210), et sur une longueur d'au moins 3 cm, de préférence comprise entre 3 cm et 6 cm depuis l'interruption jusqu'à l'autre extrémité, et
- les gradins (200) de l'élément de contre-serrage (110), moins les interruptions éventuelles telles que des rainures s'étendant transversalement, présentant chacun une longueur d'au moins 8 cm.

**6.** Procédé selon l'une quelconque des revendications précédentes, **caractérisé en ce que**

- un trou traversant (220) est fabriqué par enlèvement de matière dans l'élément de serrage (100), lequel s'étend perpendiculairement au côté extérieur de l'élément de serrage (100) jusqu'au côté intérieur et perpendiculairement aux gradins (200), et
- sur le côté intérieur de l'élément de serrage (100), des gradins (200) sont usinés par enlèvement de matière, lesquels s'étendent depuis une extrémité de l'élément de serrage (100), le long de la direction longitudinale (X) de l'élément de serrage, jusqu'au trou traversant (220), sont interrompus par le trou traversant (220) et s'étendent depuis le trou traversant (220) jusqu'à l'autre extrémité de l'élément de serrage (100).

**7.** Procédé selon l'une quelconque des revendications précédentes, **caractérisé en ce que**

- au moins une rainure (210) est fabriquée par enlèvement de matière sur le côté intérieur de l'élément de serrage (100), laquelle s'étend perpendiculairement à la direction longitudinale (X) de l'élément de serrage, et
- sur le côté intérieur de l'élément de serrage (100), des gradins (200) sont usinés par enlèvement de matière, lesquels s'étendent depuis une extrémité de l'élément de serrage (100), le long de la direction longitudinale de l'élément de serrage, jusqu'à l'au moins une rainure (210), sont interrompus par l'au moins une rainure (210) et s'étendent depuis la rainure (210) jusqu'à l'autre extrémité de l'élément de serrage (100) ou jusqu'à une autre rainure adjacente (210), à chaque fois avec une hauteur de gradin constante.

**8.** Procédé selon l'une quelconque des revendications précédentes, **caractérisé en ce que**

- sur le côté intérieur de l'élément de serrage (100), des gradins (200) sont usinés par enlèvement de matière, lesquels s'étendent depuis une extrémité de l'élément de serrage (100) en continu jusqu'à l'autre extrémité de l'élément de serrage (100),
- le trou traversant (220) et/ou la rainure (210) sont fabriqués après que les gradins (200) ont été usinés, et
- la rainure (210) et/ou le trou traversant (220) interrompent les gradins (200).

**9.** Procédé selon l'une quelconque des revendications précédentes,
**caractérisé en ce que**
l'élément de serrage (100) et/ou l'élément de contre-serrage (110) sont fabriqués dans le corps métallique d'une seule pièce par un procédé d'usinage par enlèvement de copeaux.

**10.** Procédé selon l'une quelconque des revendications précédentes,
**caractérisé en ce que**
les gradins (200) sont fabriqués par fraisage et le trou traversant (220) est fabriqué par fraisage ou perçage.

**11.** Procédé selon l'une quelconque des revendications précédentes,
**caractérisé en ce**
**qu'**une extrémité de tube d'un tube est insérée dans le trou traversant (220) et y est fixée, en particulier par vissage et/ou soudage.

**12.** Procédé selon l'une quelconque des revendications précédentes,
**caractérisé en ce que**

- au moins un trou de fixation (250) est fabriqué dans une région de bord de l'élément de serrage (100), lequel permet un passage d'un élément de vissage, en particulier d'une tige filetée ou d'une vis, et
- dans une région de bord de l'élément de contre-serrage (110) est fabriqué au moins un trou fileté (450) qui permet une insertion par vissage de l'élément de vissage et une fixation par vissage de l'élément de serrage (100) avec l'élément de contre-serrage (110) au moyen de l'élément de vissage.

**13.** Procédé selon l'une quelconque des revendications précédentes,
**caractérisé en ce**
**qu'**un dispositif de protection contre les chutes ou un support d'antenne est fabriqué en tant que dispositif de fixation (10).

**14.** Dispositif de fixation (10) approprié pour le montage sur deux chevrons (20, 21), comprenant

- une base de montage (30) qui est réalisée de manière télescopique et peut être réglée en longueur,
- un élément de serrage (100) et
- un élément de contre-serrage (110), qui peut être connecté à l'élément de serrage (100) de telle sorte que l'élément de serrage (100) et l'élément de contre-serrage (110) puissent serrer une portion de la base de montage (30), **caractérisé en ce que**
- l'élément de serrage (100) et/ou l'élément de contre-serrage (110) se composent chacun d'un corps métallique d'une seule pièce,
- des gradins (200) étant prévus sur le côté intérieur de l'élément de serrage (100) et/ou de l'élément de contre-serrage (110), dont les arêtes de gradin (201), après le montage de l'élément de serrage (100) et de l'élément de contre-serrage (110), s'appliquent contre la base de montage (30), et
- les gradins (200) s'étendant depuis l'une des extrémités de l'élément de serrage (100) ou de l'élément de contre-serrage (110), le long de la direction longitudinale (X) de l'élément de serrage, jusqu'à l'autre extrémité respective, et ce en continu ou au moins sur une longueur d'au moins 30 % de la distance totale entre les deux extrémités de l'élément de serrage (100) ou de l'élément de contre-serrage (110).

**15.** Dispositif de fixation (10) selon la revendication 14,
**caractérisé en ce que**

- le dispositif de fixation (10) forme un dispositif de protection contre les chutes et le tube de raccordement (80) forme un élément de fixation du dispositif de protection contre les chutes,
- un dispositif de raccordement (810) en forme d'œillet est monté, directement ou indirectement, au niveau de l'extrémité du tube de raccordement (80) éloignée des moyens de retenue (90) et
- le dispositif de raccordement (810) permet le montage d'un moyen de fixation externe, par exemple d'un crochet ou d'un câble, avec lequel une personne se trouvant sur un toit peut se protéger contre une chute.

Fig. 1

EP 3 239 537 B1

X

80

300

300

100

85

300

300

110

30

Fig. 2

Fig. 3

EP 3 239 537 B1

Fig. 4

EP 3 239 537 B1

Fig. 5

21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 14166890 A
- EP 2913887 A1
- EP 2365580 A1
- EP 2309832 A1
- US 20140321902 A1